# EUROPEAN PATENT SPECIFICATION

(11) **EP 4 215 501 B1**
(45) Date of publication and mention of the grant of the patent: **27.05.2026**
(21) Application number: 21869013.9
(22) Date of filing: 16.07.2021
(51) Int. Cl.: C03C 10/00, C03C 3/087, C03C 21/00, C03C 4/02

(54) **CRYSTALLIZED GLASS AND REINFORCED CRYSTALLIZED GLASS**
KRISTALLISIERTES GLAS UND VERSTÄRKTES KRISTALLISIERTES GLAS
VERRE CRISTALLISÉ ET VERRE CRISTALLISÉ RENFORCÉ

(30) Priority: 18.09.2020 JP 2020157064
(43) Date of publication of application: 26.07.2023
(73) Proprietor: Ohara Inc., Kanagawa 252-5286 (JP)
(72) Inventor: ODA, Nozomu, Sagamihara-shi Kanagawa 252-5286 (JP)
(74) Representative: SSM Sandmair
(86) International application number: PCT/JP2021/026773
(87) International publication number: WO 2022/059326

(56) References cited:
- JP-A- 2017 509 574
- JP-B2- S6 049 145
- RU-C1- 2 139 259
- RU-C1- 2 139 260
- US-A1- 2014 087 194
- US-B2- 9 403 716

## Description

### FIELD OF THE DISCLOSURE

The present disclosure relates to black crystallized glass and reinforced crystallized glass of the black crystallized glass.

### BACKGROUND OF THE DISCLOSURE

Various types of glass are used as a cover glass for protecting a display of portable electronic devices such as a smartphone and a tablet PC, and as a protector for protecting a lens of an in-vehicle optical device. In recent years, there is a demand for a use in a housing or the like serving as an exterior of an electronic device. In such cases, glass colored in various colors is preferred. Thus, there is an increasing demand for a glass having high strength so that these devices can withstand more rigorous use.

Patent Document 1 describes crystallized glass that is chemically strengthened to increase the strength. The crystallized glass is colored in a black color having good light-shielding properties. Therefore, when the crystallized glass is used for a housing of a portable electronic device such as a smartphone, light is prevented from escaping to the outside, even if inner components scintillate.

### CITATION LIST

### [Patent Literature]

[Patent Document 1] Japanese Unexamined Patent Application Publication No. 2019-182719

US 9,403,716 B2 discloses a glass-ceramic comprising: less than about 15 wt% of one or more crystalline oxide phases; and a composition comprising on an oxide basis in mol%: about 50-76 SiO₂; about 4-25 Al₂O₃; greater than 0 to about 14 P₂O₅ + B₂O₃; greater than 0 to about 33 R₂O, wherein R₂O comprises one or more of Li₂O, Na₂O, K₂O, Rb₂O, Cs₂O, Cu₂O, and Ag₂O; and greater than 0 to about 5 of one or more nucleating agents.

JP S60 49145 B2 discloses preparation of a crystallized glass from a raw material prepared by mixing 40-60wt% SiO₂, 15-25wt% Al₂O₃, 0-12wt% MgO, 0-12wt% ZnO, 3-15wt% MgO and ZnO, 1-5wt% TiO₂, 2-10wt% B₂O₃ and 4-13wt% Na₂O.

RU 2 139 259 C1 discloses a glaze for ceramic industry comprising SiO₂, Al₂O₃, TiO₂, Fe₂O₃, CaO, MgO, K₂O, Na₂O, ZnO, ZrO₂, B₂O₃, FeO, P₂O₅ and F.

RU 2 139 260 C1 discloses a glaze for ceramic industry comprising SiO₂, Al₂O₃, Fe₂O₃, TiO₂, CaO, MgO, Na₂O, K₂O, B₂O₃, P₂O₅, V₂O₅, SO₃, FeO, MnO and ZnO or CuO.

### SUMMARY OF THE DISCLOSURE

### [Technical Problem]

However, an essential component of the black crystallized glass described in Patent Document 1 is a toxic cobalt component, which posed a safety problem. In addition, the crystallized glass is very susceptible to devitrification, and therefore, it is difficult to produce the crystallized glass in a stable manner. Therefore, there is a desire to improve the composition, while maintaining the strength and the black color having good light-shielding properties.

The present disclosure has been made in view of the problems described above. An object of the present disclosure is to provide black crystallized glass that is safe and easy to produce, and reinforced crystallized glass of the black crystallized glass.

### Solution to Problem

The invention is set out in appended claim 1. The dependent claims describe advantageous embodiments.

### [Effects of the Invention]

According to the present disclosure, it is possible to provide black crystallized glass that is safe and easy to produce, and reinforced crystallized glass of the black crystallized glass.

The crystallized glass and the reinforced crystallized glass of the present disclosure are black-colored glass-based materials, and thus have unique outer appearance characteristics that can be used in housings, outer frame members, and other decorative applications of portable electronic devices such as communication devices and information devices. The crystallized glass and the reinforced crystallized glass of the present disclosure can also be used for stationary electronic devices.

### DETAILED DESCRIPTION OF THE EXEMPLARY EMBODIMENTS

Embodiments and examples according to the present disclosure will be described below in detail, but the present disclosure is not limited to the following embodiments and examples, and may be implemented with appropriate changes within the scope of the object of the present disclosure.

As used herein, "A% to B%" represents A% or more and B% or less. Further, "0%" in "containing 0% to C%" refers to a content of 0%.

The crystallized glass of the present invention contains, by wt% in terms of oxide,
45.0% to 65.0% of a SiO₂ component,
13.0% to 23.0% of an Al₂O₃ component,
8.0% to 16.0% of a Na₂O component,
1.0% to 7.0% of a K₂O component,
2.0% to 15.0% of one or more selected from a MgO component and a ZnO component,
0.01% to 3.0% of a CaO component,
1.0% to 3.0% of a TiO₂ component,
0% to 3.0% of one or more types selected from a group consisting of a Sb₂O₃ component, a SnO₂ component, and a CeO₂ component; and
1.0% to 6.5% of a Fe₂O₃ component.

The crystallized glass of the present invention does not contain a CoO component and a Co₃O₄ component.

If such a composition is provided, it is possible to obtain a crystallized glass that is colored black and has high light-shielding properties. Furthermore, a glass that is a raw material of the crystallized glass of the present disclosure is less prone to devitrification and is easy to produce.

"In terms of oxide" means, if it is assumed that all the components included in the crystallized glass are dissolved and converted into oxides and a total weight of the oxides is 100 wt% (or 100 mol%), an amount of oxides in each of the components contained in the crystallized glass is expressed by wt% (or mol%). As used herein, contents of each component are expressed by wt% in terms of oxide unless otherwise specified.

The SiO₂ component is contained in an amount of 45.0% to 65.0%, and preferably 50.0% to 60.0%.

The Al₂O₃ component is contained in an amount of 13.0% to 23.0%.

The Na₂O component is contained in an amount of 8.0% to 16.0%. The Na₂O component may also be contained in an amount of 9.0% or more, 9.5% or more, or 10.5% or more. The Na₂O component contributes to chemical strengthening.

The K₂O component is contained in an amount of 1.0% to 7.0%.

The one or more components selected from the MgO component and the ZnO component are contained in an amount of 2.0% to 15.0%, preferably 3.0% to 13.0%, and particularly preferably 5.0% to 11.0%. The one or more components selected from the MgO component and the ZnO component may be the MgO component alone, the ZnO component alone, or both of the components, but preferably the MgO component alone. Also, the MgO component may be 2.7 mol% or more, 2.8 mol% or more, or 3.0 mol% or more.

The CaO component is contained in an amount of 0.01% to 3.0%, and preferably 0.1% to 2.0%.

The TiO₂ component is contained in an amount of 1.0% to 3.0%, preferably 1.5% to 2.9%, and even more preferably 1.8% to 2.8%.

The Fe₂O₃ component is contained in an amount of 1.0% to 6.5%, and preferably 2.0% to 4.5%.

A combined content of the TiO₂ component and the Fe₂O₃ component is preferably 3.0% to 7.5%, and more preferably 4.0% to 6.8%.

The crystallized glass contains 0% to 3.0% (0.01% to 2.0%, or 0.05% to 1.0%) of one or more selected from the Sb₂O₃ component, the SnO₂ component, and the CeO₂ component.

The above-mentioned blending amounts may be appropriately combined.

A combined content of the one or more components selected from the SiO₂ component, the Al₂O₃ component, the Na₂O component, the MgO component, and the ZnO component; the TiO₂ component; and the Fe₂O₃ component may be 90% or more, preferably 95% or more, more preferably 98% or more, and still more preferably 98.5% or more.

A combined content of the one or more components selected from the SiO₂ component, the Al₂O₃ component, the Na₂O component, the K₂O component, the MgO component, and the ZnO component; the CaO component; the TiO₂ component; the Fe₂O₃ component; and the one or more components selected from the Sb₂O₃ component, the SnO₂ component, and the CeO₂ component may be 90% or more, preferably 95% or more, more preferably 98% or more, and still more preferably 99% or more. These components may also account for 100% of the crystallized glass.

The crystallized glass may or may not contain a ZrO₂ component as long as the effect of the present disclosure is not impaired. The blending amount of the ZrO₂ component may be 0% to 5.0%, 0% to 3.0%, or 0% to 2.0%.

As long as the effect of the present disclosure is not impaired, the crystallized glass may or may not contain a B₂O₃ component, a P₂O₅ component, a BaO component, a SnO₂ component, a Li₂O component, a SrO component, a La₂O₃ component, a Y₂O₃ component, a Nb₂O₅ component, a Ta₂O₅ component, a WO₃ component, a TeO₂ component, and a Bi₂O₃ component. The blending amount of each of the components may be 0% to 2.0%, 0% or more and less than 2.0%, or 0% to 1.0%. The combined blending amount of the B₂O₃ component and the P₂O₅ component may be 3.5 mol % or less, 2.0 mol % or less, 1.0 mol % or less, or 0 mol %.

The crystallized glass may contain, as a clarifying agent, an As₂O₃ component, and one or more types selected from the group of F, NOx, and SOx, in addition to the Sb₂O₃ component, the SnO₂ component, and the CeO₂ component. An upper limit of the content of the clarifying agent is preferably 5.0%, more preferably 2.0%, and most preferably 1.0%. Note that SOx (x being 3 or the like) is unstable in redox reactions and thus may adversely affect coloring, so that it is preferable that the crystallized glass does not contain SOx.

As long as the characteristics of the crystallized glass according to the present disclosure are not impaired, the crystallized glass may or may not contain other components not described above. Examples of the other components include metal components such as Nb, Gd, Yb, Lu, V, Cr, Mn, Ni, Cu, Ag, and Mo (including metal oxides thereof).

Moreover, there is a tendency to refrain from using components of Pb, Th, Tl, Os, Be, Cl, and Se, which are considered in recent years as harmful chemical substances, and thus, it is preferable that these components are substantially not contained.

Generally, the crystal phase of the crystallized glass is determined by using a peak angle appearing in an X-ray diffraction pattern in X-ray diffraction analysis, and by using TEMEDX if necessary. The crystallized glass used in the present disclosure contains, for example, MgAl₂O₄, Mg₂TiO₅, MgTi₂O₅, Mg₂TiO₄, MgTi₂O₄, Mg₂SiO₄, MgSiO₃, MgAl₂Si₂O₈, Mg₂Al₄Si₅O₁₈, FeAl₂O₄, MgFe₂O₄, FeTi₂O₅, Fe₂O₃, Fe₃O₄, and one or more selected from solid solutions thereof, as the crystal phase.

The reinforced crystallized glass of the present disclosure is obtained by strengthening the above-described crystallized glass to form a compressive stress layer on a surface.

A stress depth of the compressive stress layer of the reinforced crystallized glass is preferably 10 µm or more. When the compressive stress layer has such a thickness, even if a deep crack occurs in the reinforced crystallized glass, it is possible to prevent the crack from developing and a glass substrate from being broken.

A surface compressive stress of the compressive stress layer is preferably 750 MPa or more, more preferably 900 MPa or more, and still more preferably 950 MPa or more. An upper limit of the surface compressive stress may be, for example, 1300 MPa or less, 1200 MPa or less, or 1100 MPa or less. If the compressive stress layer has such a compressive stress value, it is possible to prevent a crack from developing and the mechanical strength can be increased.

In the crystallized glass and the reinforced crystallized glass (hereinafter, also simply referred to as crystallized glass) of the present disclosure, a light transmittance including reflection loss is preferably 0.20% or less at a thickness of 1 mm in a wavelength range of 300 to 700 nm.

The above-described light transmittance is more preferably 0.15% or less, and still more preferably 0.10% or less in the wavelength range of 300 to 700 nm.

Furthermore, the crystallized glass has a light transmittance including reflection loss of preferably 0.50% or less, more preferably 0.40% or less, and even more preferably 0.10% or less at a thickness of 1 mm and a wavelength of 900 nm.

The crystallized glass of the present disclosure preferably has a color in CIELAB color space coordinates obtained from a reflection spectrum including specular reflection at an angle of incidence of 5° relative to a reflective surface measured with a spectrophotometer using CIE illuminant D65 at an observer angle of 2° and a thickness of 1 mm, without a white plate on a rear surface, the color having
CIE a* in a range of -0.10 to 0.10,
CIE b* in a range of -2.00 to 0.10, and
CIE L* in a range of 20.0 to 30.0.

The CIE a* is more preferably in a range of -0.09 to 0.05, and still more preferably in a range of -0.08 to 0.00.

The CIE b* is more preferably in a range of -1.50 to 0.05, and still more preferably in a range of -1.20 to 0.00.

The CIE L* is more preferably in a range of 22.0 to 29.0, and still more preferably in a range of 23.0 to 28.0.

Although a thickness of the crystallized glass is not particularly limited, the thickness is usually from 0.05 mm to 2.0 mm. Reinforced crystallized glass usually has a plate shape. The stress depth of the compressive stress layer on one side of the compressive stress layer is preferably 5% or more, and more preferably 8% to 20% of the thickness of the reinforced crystallized glass.

The crystallized glass and the reinforced crystallized glass of the present disclosure may be produced by the following method. That is, raw materials are uniformly mixed so that the components satisfy a predetermined content range, and are melted and shaped to produce raw glass. Next, the raw glass is crystallized to manufacture crystallized glass. Further, the crystallized glass is chemically strengthened.

The raw glass is subjected to heat treatment to precipitate crystals in the glass. The heat treatment may be performed at a one-stage temperature or a two-stage temperature.

The two-stage heat treatment includes a nucleation step of firstly treating the raw glass by heat at a first temperature and a crystal growth step of treating, after the nucleation step, the glass by heat at a second temperature higher than that in the nucleation step.

In the one-stage heat treatment, the nucleation step and the crystal growth step are continuously performed at the one-stage temperature. Typically, the temperature is raised to a predetermined heat treatment temperature, is maintained for a certain period of time after reaching the predetermined heat treatment temperature, and is then lowered.

The first temperature of the two-stage heat treatment is preferably 600°C to 750°C. A retention time at the first temperature is preferably 30 minutes to 2000 minutes, and more preferably 180 minutes to 1440 minutes.

The second temperature of the two-stage heat treatment is preferably 650°C to 850°C. A retention time at the second temperature is preferably 30 minutes to 600 minutes, and more preferably 60 minutes to 300 minutes.

When the heat treatment is performed at the one-stage temperature, the heat treatment temperature is preferably 600°C to 800°C, and more preferably 630°C to 770°C. A retention time at the heat treatment temperature is preferably 30 minutes to 500 minutes, and more preferably 60 minutes to 400 minutes.

A compact is manufactured from the crystallized glass by using, for example, grinding and polishing means. By processing the compact into a thin plate, it is possible to manufacture a plate-shaped crystallized glass. Further, the plate-shaped crystallized glass may be processed into a shape suitable for an application such as a housing.

Subsequently, in the present disclosure, a compressive stress layer is formed on the crystallized glass.

The chemical strengthening method may be implemented according to the following steps. During 10 minutes to 12 hours, a crystallized glass is contacted with or immersed in a molten salt of a salt containing potassium or sodium, for example, potassium nitrate (KNO₃) and sodium nitrate (NaNO₃), or a mixed salt thereof heated to 350°C to 600°C. Thus, an ion exchange reaction between a component present in a glass phase near the surface and a component contained in the molten salt proceeds. As a result, the compressive stress layer is formed on a surface portion of the crystallized glass.

In particular, a crystallized glass base material is chemically strengthened in a first stage using a mixed molten salt of a potassium salt and a sodium salt (mixed bath) or a single molten salt of a sodium salt (single bath). After the first stage, the crystallized glass base material is chemically strengthened in a second stage using a single molten salt of a potassium salt (single bath). Therefore, it is possible to further increase the surface compressive stress relative to the central compressive stress. As a result, it is possible to obtain a crystallized glass that has high impact resistance and is less likely to break into small fragments (explosive breakage) even if broken upon impact. Specifically, for example, during 90 minutes or longer, the crystallized glass base material is contacted with or immersed in a molten salt of a salt containing potassium or sodium, for example, a mixed salt or a composite salt of potassium nitrate and sodium nitrate heated to 350°C to 600°C. A mixing ratio of the potassium salt and the sodium salt is, for example, 1:1 to 100: 1, or 10:1 to 75:1 expressed as a weight ratio. Subsequently, during a short period of time, the crystallized glass base material is preferably contacted with or immersed in a molten salt obtained by heating a salt containing potassium, for example, potassium nitrate to 380°C to 550°C. The short period of time is, for example, 1 minute or more, or 3 to 100 minutes.

### EXAMPLES

### Examples 1 and 2, and Comparative Example 1

Raw materials such as oxides, hydroxides, carbonates, nitrates, fluorides, chlorides, and metaphosphate compounds corresponding to a raw material of each component of the crystallized glass were selected, and the selected raw materials were weighed and mixed uniformly to obtain the compositions described in Table 1.

Next, the mixed raw materials were fed into and melted in a platinum crucible. Subsequently, the molten glass was stirred and homogenized, cast into a mold, and slowly cooled to manufacture raw glass.

The obtained raw glass was subjected to heat treatment at 705°C during five hours for nucleation and crystallization to manufacture crystallized glass.

The manufactured crystallized glass was cut and ground, and opposing sides of the obtained crystallized glass were further polished in parallel to achieve a thickness of 1 mm. Next, the crystallized glass was used as a base material and immersed into a molten salt of KNO₃ at 500° C for 30 minutes to chemically strengthen the crystallized glass and obtain reinforced crystallized glass.

The obtained crystallized glass and the reinforced crystallized glass were evaluated as follows. The results are shown in Table 2. Table 2 also shows the specific gravity of the crystallized glass.

### (1) Transmittance

The light transmittance of the crystallized glass, including reflection loss at a thickness of 1 mm, was measured by using a spectrophotometer (U-4000 model, manufactured by Hitachi High Technology). Table 2 lists the transmittance (%) in the range of 300 nm to 1500 nm and a wavelength at which the transmittance is 5%.

### (2) Chromaticity

The reflection spectrum of the crystallized glass and the reinforced crystallized glass, including specular reflection at an angle of incidence of 5° relative to a reflective surface, was measured by using a spectrophotometer (V-650, manufactured by JASCO Corporation). At this time, the thickness of the sample was 1 mm, and the measurement was performed without a white alumina plate placed on a back surface of the glass (opposite side of the glass surface irradiated by the light source). From the obtained spectrum, L*, a*, and b* were determined at an observer angle of 2° and CIE illuminant D65.

### (3) Stress Measurement

A thickness of the compressive stress layer (DOL) and a compressive stress value (CS) (MPa) on a surface of the compressive stress layer were measured in the reinforced crystallized glass by using a glass surface stress meter FSM-6000LE manufactured by Orihara Manufacturing Co., LTD. A refractive index of 1.54 and an optical elastic constant of 29.658 [(nm/cm)/MPa] of the samples were used to calculate the thickness of the compressive stress layer and the surface compressive stress value. A central compressive stress value (CT) was evaluated by using curve analysis. The results are shown in Table 2.

**[Table 1]**

| | | Example 1 | Example 2 | Comparative Example 1 |
|---|---|---|---|---|
| Composition (wt.%) | SiO₂ | 54.12 | 54.17 | 52.91 |
| | Al₂O₃ | 17.84 | 17.86 | 17.44 |
| | Na₂O | 11.50 | 11.51 | 11.24 |
| | K₂O | 2.38 | 2.38 | 2.33 |
| | MgO | 7.78 | 7.79 | 7.61 |
| | CaO | 0.84 | 0.84 | 0.82 |
| | TiO₂ | 2.48 | 2.48 | 4.55 |
| | Sb₂O₃ | 0.08 | 0.00 | 0.08 |
| | Fe₂O₃ | 2.97 | 2.98 | 2.91 |
| | Co₃O₄ | 0.00 | 0.00 | 0.11 |
| | CoO | 0.00 | 0.00 | 0.00 |
| Crystallization conditions | Crystallization temperature | 705 | 705 | 705 |
| | Retention time (hr) | 5 | 5 | 5 |
| Reinforcing conditions | Plate thickness (mm) | 1 | 1 | 1 |
| | Molten salt | KNO₃ | KNO₃ | KNO₃ |
| | Salt bath temperature (°C) | 500 | 500 | 500 |
| | Immersion time (min) | 30 | 30 | 30 |

**[Table 2]**

| | | | Example 1 | Example 2 | Comparative Example 1 |
|---|---|---|---|---|---|
| | Specific gravity | | 2.56 | 2.56 | 2.58 |
| | Transmittance at 1mm (%) | 300 nm | 0.0 | 0.0 | 0.0 |
| | | 410 nm | 0.0 | 0.0 | 0.0 |
| Crystallized glass | | 500 nm | 0.0 | 0.0 | 0.0 |
| | | 700 nm | 0.0 | 0.0 | 0.0 |
| | | 850 nm | 0.0 | 0.0 | 0.0 |
| | | 900 nm | 0.0 | 0.0 | 0.0 |
| | | 1050 nm | 0.0 | 0.0 | 0.0 |
| | | 1200 nm | 0.1 | 0.1 | 0.2 |
| | | 1500 nm | 2.7 | 2.4 | 4.5 |
| | Transmittance 5% | Wavelength (nm) | 1579 | 1596 | 1516 |
| | Chromaticity (D65, 5°) | L* | 25.93 | 25.91 | 26.34 |
| | | a* | -0.07 | -0.08 | -0.06 |
| | | b* | -0.92 | -0.90 | -0.99 |
| Reinforced crystallized glass | Compressive stress layer | Surface stress (MPa) | 1057 | 1065 | 1109 |
| | | Strengthening depth (µm) | 12.2 | 13.1 | 14.1 |
| | | Center stress (MPa) | 12.4 | 13.3 | 13.4 |
| | Chromaticity (D65, 5°) | L* | 26.02 | 25.94 | 26.55 |
| | | a* | -0.06 | -0.06 | -0.02 |
| | | b* | -0.87 | -0.84 | -1.06 |

From Tables 1 and 2, it can be seen that the crystallized glass and the reinforced crystallized glass in the Examples have a lower content of a titanium component and do not contain a cobalt component as compared with the Comparative Example, are black in color with good light-shielding properties and a high stress value similar to the Comparative Example.

## Claims

1. A crystallized glass, comprising:
by wt% in terms of oxide,
45.0% to 65.0% of a SiO₂ component;
13.0% to 23.0% of an Al₂O₃ component;
8.0% to 16.0% of a Na₂O component;
1.0% to 7.0% of a K₂O component;
2.0% to 15.0% of one or more selected from a MgO component and a ZnO component;
0.01% to 3.0% of a CaO component;
1.0% to 3.0% of a TiO₂ component;
0% to 3.0% of one or more types selected from a group consisting of a Sb₂O₃ component, a SnO₂ component, and a CeO₂ component; and
1.0% to 6.5% of a Fe₂O₃ component, and
not comprising a CoO component and a Co₃O₄ component.

2. The crystallized glass according to claim 1, wherein, by wt% in terms of oxide, a content of a B₂O₃ component is less than 2.0%.

3. The crystallized glass according to claim 1 or 2, wherein, by wt% in terms of oxide, a content of a Na₂O component is 9.5% or more.

4. The crystallized glass according to any one of claims 1 to 3, wherein a light transmittance including a reflection loss at a thickness of 1 mm is 0.20% or less in a wavelength range of 300 nm to 700 nm.

5. The crystallized glass according to any one of claims 1 to 4, wherein a light transmittance including a reflection loss at a thickness of 1 mm is 0.50% or less at a wavelength of 900 nm.

6. The crystallized glass according to any one of claims 1 to 5, comprising a color in CIELAB color space coordinates obtained from a reflection spectrum including specular reflection at an angle of incidence of 5° relative to a reflective surface measured with a spectrophotometer using CIE illuminant D65 at an observer angle of 2° and a thickness of 1 mm, without a white plate on a rear surface, the color having
CIE a* in a range of -0.10 to 0.10,
CIE b* in a range of -2.00 to 0.10, and
CIE L* in a range of 20.0 to 30.0.

7. A reinforced crystallized glass comprising, as a base material, the crystallized glass according to any one of claims 1 to 6, and a compressive stress layer formed in a surface of the reinforced crystallized glass.

## Patentansprüche

1. Kristallisiertes Glas, umfassend:
in Gewichtsprozent bezogen auf Oxid,
45,0 % bis 65,0 % einer SiO₂-Komponente;
13,0 % bis 23,0 % einer Al₂O₃-Komponente;
8,0 % bis 16,0 % einer Na₂O-Komponente;
1,0 % bis 7,0 % einer K₂O-Komponente;
2,0 % bis 15,0 % einer oder mehrerer, ausgewählt aus einer MgO-Komponente und einer ZnO-Komponente;
0,01 % bis 3,0 % einer CaO-Komponente;
1,0 % bis 3,0 % einer TiO₂-Komponente;
0 % bis 3,0 % einer oder mehrerer Arten, ausgewählt aus einer Gruppe bestehend aus einer Sb₂O₃-Komponente, einer SnO₂-Komponente und einer CeO₂-Komponente; und
1,0 % bis 6,5 % einer Fe₂O₃-Komponente, und
wobei keine CoO-Komponente und keine Co₃O₄-Komponente umfasst sind.

2. Kristallisiertes Glas gemäß Anspruch 1, wobei ein Gehalt an einer B₂O₃-Komponente, in Gewichtsprozent bezogen auf Oxid, weniger als 2,0 % beträgt.

3. Kristallisiertes Glas gemäß Anspruch 1 oder 2, wobei ein Gehalt an einer Na₂O-Komponente, in Gewichtsprozent bezogen auf Oxid, 9,5 % oder mehr beträgt.

4. Kristallisiertes Glas gemäß einem der Ansprüche 1 bis 3, wobei eine Lichtdurchlässigkeit einschließlich eines Reflexionsverlusts bei einer Dicke von 1 mm in einem Wellenlängenbereich von 300 nm bis 700 nm 0,20 % oder weniger beträgt.

5. Kristallisiertes Glas gemäß einem der Ansprüche 1 bis 4, wobei eine Lichtdurchlässigkeit einschließlich eines Reflexionsverlusts bei einer Dicke von 1 mm bei einer Wellenlänge von 900 nm 0,50 % oder weniger beträgt.

6. Kristallisiertes Glas gemäß einem der Ansprüche 1 bis 5, umfassend eine Farbe in CIELAB-Farbraumkoordinaten, die aus einem Reflexionsspektrum einschließlich Spiegelreflexion bei einem Einfallswinkel von 5° relativ zu einer reflektierenden Oberfläche erhalten werden, gemessen mit einem Spektralphotometer unter Verwendung der CIE-Lichtart D65 bei einem Beobachtungswinkel von 2° und einer Dicke von 1 mm, ohne eine weiße Platte auf einer Rückseite, wobei die Farbe
CIE a* in einem Bereich von -0,10 bis 0,10,
CIE b* in einem Bereich von -2,00 bis 0,10 und
CIE L* in einem Bereich von 20,0 bis 30,0 aufweist.

7. Verstärktes kristallisiertes Glas, das als ein Grundmaterial das kristallisierte Glas gemäß einem der Ansprüche 1 bis 6 und eine in einer Oberfläche des verstärkten kristallisierten Glases ausgebildete Druckspannungsschicht umfasst.

## Revendications

1. Verre cristallisé, comprenant :
en % en poids quant à l'oxyde,
de 45,0 % à 65,0 % d'un composant SiO₂ ;
de 13,0 % à 23,0 % d'un composant Al₂O₃ ;
de 8,0 % à 16,0 % d'un composant Na₂O ;
de 1,0 % à 7,0 % d'un composant K₂O ;
de 2,0 % à 15,0 % d'un ou de plusieurs sélectionnés parmi un composant MgO et un composant ZnO ;
de 0,01 % à 3, 0 % d'un composant CaO ;
de 1,0 % à 3,0 % d'un composant TiO₂ ;
de 0 % à 3,0 % d'un ou plusieurs types sélectionnés parmi un groupe constitué d'un composant Sb₂O₃, d'un composant SnO₂, et d'un composant CeO₂ ; et
de 1,0 % à 6,5 % d'un composant Fe₂O₃, et
ne comprenant pas un composant CoO et un composant Co₃O₄.

2. Verre cristallisé selon la revendication 1, dans lequel, en % en poids quant à l'oxyde, une teneur en un composant B₂O₃ est de moins de 2,0 %.

3. Verre cristallisé selon la revendication 1 ou 2, dans lequel, en % en poids quant à l'oxyde, une teneur en un composant Na₂O est de 9,5 % ou plus.

4. Verre cristallisé selon l'une quelconque des revendications 1 à 3, dans lequel une transmittance de lumière incluant une perte de réflexion à une épaisseur de 1 mm est de 0,20 % ou moins dans une plage de longueurs d'onde de 300 nm à 700 nm.

5. Verre cristallisé selon l'une quelconque des revendications 1 à 4, dans lequel une transmittance de lumière incluant une perte de réflexion à une épaisseur de 1 mm est de 0,50 % ou moins à une longueur d'onde de 900 nm.

6. Verre cristallisé selon l'une quelconque des revendications 1 à 5, comprenant une couleur dans des coordonnées d'espace de couleur CIELAB obtenues d'un spectre de réflexion, incluant une réflexion spéculaire à un angle d'incidence de 5° relativement à une surface réfléchissante, mesuré avec un spectrophotomètre en utilisant l'illuminant D65 CIE à un angle d'observateur de 2° et une épaisseur de 1 mm, sans plaque blanche sur une surface arrière, la couleur ayant
CIE a* dans une plage de -0,10 à 0,10,
CIE b* dans une plage de -2,00 à 0,10, et
CIE L* dans une plage de 20,0 à 30,0.

7. Verre cristallisé renforcé, comprenant, en tant que matériau de base, le verre cristallisé selon l'une quelconque des revendications 1 à 6, et une couche à contrainte de compression formée dans une surface du verre cristallisé renforcé.
